# EUROPEAN PATENT APPLICATION

(11) **EP 2 228 766 A1**
(43) Date of publication of application: **15.09.2010**
(21) Application number: 08855329.2
(22) Date of filing: 27.11.2008
(51) Int. Cl.: G06Q 50/00

(54) **DATA PROCESSING SYSTEM, ITS COMPUTER PROGRAM AND DATA PROCESSING METHOD**

(30) Priority: 30.11.2007 JP 2007309825
(71) Applicant: Japan Tobacco Inc., Tokyo 105-8422 (JP)
(72) Inventor: SHIMO, Hisaaki, Hiroshima 720-0822 (JP); WATANABE, Hiroshi, Tokyo 105-8422 (JP)
(74) Representative: HOFFMANN EITLE
(86) International application number: PCT/JP2008/003493
(87) International publication number: WO 2009/069299

(57) **Abstract**

A temperature sensing unit senses a plurality of specific temperatures caused by a specific consumable commodity consumed by an ordinary consumer at a specific space, while allowing a behavior storage unit to store q plurality of combinations of the plurality of specific temperatures as a plurality of consumption behaviors of the specific consumable commodity by ordinary consumers. A behavior specifying unit specifies consumption behaviors which match a combination of the plurality of specific temperatures sensed for each piece of the specific consumable commodity, and a data collection unit compiles the specified consumption behavior. Accordingly, data regarding the consumption behaviors of the ordinary consumers, which are uncollectible at the points of time of order intake, production, shipping and selling and so forth of the specific consumable commodity, can be collected. A data processing system capable of efficiently collecting data regarding the consumption behaviors of the specific consumable commodity, such as a cigarette, may be provided.

## Description

### TECHNICAL FIELD

The present invention relates to a data processing system which collects data regarding a consumption behavior of a specific consumable commodity by an ordinary consumer at a specific space, a computer program used therefor, and a data processing method.

### BACKGROUND ART

For the purpose of managing sales of commodities, there has been proposed a cooperative sales management system having contents of a database of a record file, which was prepared at the time of estimation, are linked in an integrated manner to the individual scenes of orders, sales, up to claim, based on centralized administrative control.

In this sort of system, data is managed based on the centralized administrative control in an integrated manner, from the scenes of orders, sales, up to claim, while making reference to the database prepared at the time of estimation. Order intake/sales probability of a certain commodity is calculated according to a predetermined rule, referring to a plurality of probabilities, such as probability of investment to the commodity by the customers, competitive advantage in order intake by middlemen who participate into dealing of the commodities rather than direct selling, and competitive probability expressing advantage of marketing company *per* se over the competitors, and thereby monthly and periodic order intake/sales forecast and budget control are made conforming to business records of a company (see Patent Document 1, for example).

There has also been proposed a sales results data collection system which finds commodity sales on the store basis and commodity supplier basis, to thereby collect useful information on sales results. In this sort of system, for example, sales results data which include sales data representing quantity of commodities sold by the individual stores owned by an agent, store code for identifying the stores, manufacturer code for identifying commodity supplier/manufacturer representing supply base of the commodity and so forth, are entered into a database.

From the database, sales results data are extracted based on a data extraction condition specified through a client terminal, and a base data file, based on which a report is prepared, is prepared. The client terminal prepares a sales results report which contains data of commodity sales collected on the basis of commodity supplier/manufacturers, based on the received base data file (see Patent Document 2, for example).

There has been still another proposal on collecting data on start of smoking, as a consumption behavior by an ordinary consumer, by communication using an RFID (Radio Frequency Identification) tag reader mounted on a lighter, with RFID chips preliminarily attached to the end portion and filter portion of a paper-rolled cigarette (see Patent Document 3, for example).
[Patent Document 1] Japanese Laid-Open Patent Publication No. 2005-301396
[Patent Document 2] Japanese Laid-Open Patent Publication No. 2006-139594
[Patent Document 3] Japanese Laid-Open Patent Publication No. 2005-198538

### DISCLOSURE OF THE INVENTION

As described in the above, various proposals have been made on collection and management of data regarding order status, production status, shipping status, sales status and so forth, for the purpose of research and development of products. The data processing systems can, however, collect only data regarding results of order placed by the ordinary consumers and selling stores to brokers and manufacturers, production results at the manufacturers, results of shipping from the manufacturers to the brokers and selling stores, and results of sales by the selling stores to the ordinary consumers.

In other words, the ordinary consumers, as the end users, consume the commodity, but data regarding the state of commodity are uncollectible. For this reason, the data having been collected by the conventional data processing systems are those mainly regarding the manufacturers and selling stores, so that it has been difficult to find out consumption behaviors and taste behavior of the ordinary consumers.

It may, therefore, be difficult to satisfy demands of the ordinary consumers, even if the data collected by the above-described data processing systems were adopted to research and development of the products. Accordingly, there has been partial practice of collecting data on consumption behavior, by user questionnaire.

For this purpose, there are many commodities sold with attached questionnaire postcards. This style of user questionnaire is, however, a manned sampling study, and needs human-wave tactics for sorting the collected data. Accordingly, the human cost necessary therefor may be huge, and this makes a large-scale study difficult.

On the other hand, user questionnaires are available also on so-called web sites on the Internet. In this case, a data processing system can automatically collect data on consumption behaviors of the ordinary consumers.

It is, however, still difficult to successfully collect questionnaire data free of charge. The above-described questionnaire may, therefore, need some service such as providing a prize by lottery.

In addition, the data collection in this case may fail in correctly reflecting a real condition, because a large volume of inappropriate entry may be made by the ordinary consumers who want the prize without actually consuming the commodity.

The present invention is conceived after considering the above-described problems, and is to provide a data processing system capable of effectively collecting data regarding consumption behaviors of a specific consumable commodity such as cigarette, a computer program used therefor, and a data processing method.

According to the present invention, there is provided a data processing system which collects data regarding a consumption behavior of a specific consumable commodity by an ordinary consumer at a specific space. The data processing system includes:
a temperature sensing unit which senses a plurality of specific temperatures caused by the specific consumable commodity when consumed at the specific space;
a behavior storage unit which stores a plurality of combinations of the plurality of specific temperatures as a plurality of consumption behaviors of the specific consumable commodity by ordinary consumers;
a behavior specifying unit which specifies at least one consumption behavior which matches a combination of the plurality of specific temperatures sensed for a piece of the specific consumable commodity; and
a data collection unit which compiles the specified consumption behavior.

According to the data processing system of the present invention, the temperature sensing unit senses the plurality of specific temperatures caused by the specific consumable commodity consumed by the ordinary consumer at a specific space, while allowing the behavior storage unit to store a plurality of combinations of the plurality of specific temperatures as a plurality of consumption behaviors of the specific consumable commodity by ordinary consumers. The behavior specifying unit specifies at least one consumption behavior which matches a combination of the plurality of specific temperatures sensed for each piece of the specific consumable commodity, and the data collection unit compiles the specified consumption behavior(s). Accordingly, data regarding consumption behaviors of ordinary consumers, which are uncollectible at the points of time of order intake, production, shipping and selling of the specific consumable commodity and so forth, can be collected.

In the data processing system of the present invention, the behavior storage unit may preliminarily store occurrence patterns of the plurality of specific temperatures as the plurality of consumption behaviors, and the behavior specifying unit may specify at least one consumption behavior, by matching a detected pattern of the plurality of specific temperatures for each piece of the specific consumable commodity, with the occurrence patterns.

In the data processing system of the present invention, the temperature sensing unit may have a plurality of IR (infrared) sensors having detection sensitivity respectively corresponded to the plurality of specific temperatures.

In the data processing system of the present invention, the temperature sensing unit may have a plurality of optical filters having optical characteristics respectively corresponded to the plurality of specific temperatures, and a plurality of IR sensors which respectively detect the plurality of specific temperatures through the plurality of optical filters.

In the data processing system of the present invention, the specific consumable commodity may be composed of a cigarette, the specific space may be composed of a smoking space, and the temperature sensing unit may sense the specific temperatures at least at the times of lighting and snuffing (putting out) of the cigarette.

In the data processing system of the present invention, the specific consumable commodity may be composed of a cigarette, the specific space may be composed of a smoking space, and the temperature sensing unit may sense the specific temperatures at least at the times of idling and smoking of a burning cigarette.

The data processing system of the present invention may further have a contents storage unit which stores digital contents; a contents output unit which outputs the digital contents to the specific space; and an output control unit which outputs the digital contents corresponding to the specified consumption behavior.

In the data processing system of the present invention, the data collection unit may compile the specific temperatures together with date and time of detection, and may extract a correlation between the consumption behavior and the date and time of detection.

The data processing system of the present invention may further have a space storage unit which stores space attribute data for each of the plurality of specific spaces, wherein the data collection unit may compile the specific temperatures together with the space attribute data, and extracts a correlation between the consumption behavior and the space attribute data.

The data processing system of the present invention may further have a commodity reader unit which acquires commodity ID (Identity) data from the specific consumable commodity consumed at the specific space, wherein the data collection unit may compile the specified consumption behavior in correlation with the commodity ID data.

The data processing system of the present invention may further have a fire judgment unit which judges occurrence of fire accident at the specific space based on the specific temperature sensed by the temperature sensing unit.

According to the present invention, there is also provided a computer program of a data processing system which collects data regarding a consumption behavior of a specific consumable commodity by an ordinary consumer at a specific space. The computer program is configured to allow the data processing system to execute:
a temperature sensing process which senses a plurality of specific temperatures caused by the specific consumable commodity when consumed at the specific space;
a behavior storage process which stores a plurality of combinations of the plurality of specific temperatures as a plurality of consumption behaviors of the specific consumable commodity by ordinary consumers;
a behavior specifying process which specifies at least one consumption behavior which matches a combination of the plurality of specific temperatures sensed for each piece of the specific consumable commodity; and
a data collection process which compiles the specified consumption behavior.

According to the present invention, there is still also provided a data processing method of a data processing system which collects data regarding a consumption behavior of a specific consumable commodity by an ordinary consumer at a specific space. The method includes:
a temperature sensing step which senses a plurality of specific temperatures caused by the specific consumable commodity when consumed at the specific space;
a behavior storage step which stores a plurality of combinations of the plurality of specific temperatures as a plurality of consumption behaviors of the specific consumable commodity by ordinary consumers;
a behavior specifying step which specifies at least one consumption behavior which matches a combination of the plurality of specific temperatures sensed for each piece of the specific consumable commodity; and
a data collection step which compiles the specified consumption behavior.

The various constituents of the present invention may be good enough insofar as they are configured to embody the individual functions. For, example, they may be embodied as dedicated hardware configured to express predetermined functions, a data processing system imparted with predetermined functions by a computer program, a predetermined function embodied on the data processing system by a computer program, and arbitrary combinations of these constituents.

Each of the various constituents of the present invention is not always necessarily an independent entity, and instead a plurality of constituents may configure a single component, a single constituent may be configured by a plurality of components, a certain constituent may be a part of any other constituent, and a part of certain constituent and a part of other constituent may overlap with each other, for example.

The data processing method of the present invention, sequentially enumerating a plurality of steps, does not limit the order of execution of the plurality of steps. Accordingly, when the data processing method of the present invention is carried out, the order of the plurality of steps may be varied, insofar as the variation do not adversely affect quality of the processes.

The plurality of steps of the data processing method of the present invention are not limited to be executed at different points of time. For example, a certain step may start when any other step is executed, or a period over which a certain step is executed may partially, or totally, overlap a period over which any other step is executed.

According to the data processing system of the present invention, the temperature sensing unit senses the plurality of specific temperatures caused by the specific consumable commodity consumed by an ordinary consumer at a specific space, while allowing the behavior storage unit to store a plurality of combinations of the plurality of specific temperatures as a plurality of consumption behaviors of the specific consumable commodity by ordinary consumers. The behavior specifying unit then specifies at least one consumption behavior which matches a combination of the plurality of specific temperatures sensed for each piece of the specific consumable commodity, so that the data collection unit may now be able to compile the specified consumption behavior(s). Accordingly, data regarding consumption behaviors of ordinary consumers, which are uncollectible at the points of time of order intake, production, shipping and selling of the specific consumable commodity and so forth, may be collected. As a consequence, for an exemplary case where the specific consumable commodity represented by a cigarette, is smoked at the specific space represented by a smoking space, it may now be possible to collect data on style of smoking as the consumption behaviors.

### BRIEF DESCRIPTION OF THE DRAWINGS

The above and other objects, features and advantages of the present invention will be more apparent from the following description of certain preferred embodiments taken in conjunction with the accompanying drawings.

FIG. 1 is a schematic block diagram illustrating a logical structure of a data processing system in one embodiment of the present invention.
FIG. 2 is a schematic block diagram illustrating a physical structure of the data processing system.
FIG. 3 is a schematic drawing illustrating occurrence patterns of a plurality of specific temperatures ascribable to a consumption behavior represented by a smoking behavior.
FIG. 4 is a flow chart illustrating process operations of the data processing system.
FIG. 5 is a schematic front view illustrating an output image showing a result of compilation.
FIG. 6 is a schematic side view illustrating a structure of a temperature sensing unit according to a modified example.
FIG. 7 is a perspective view illustrating an appearance of a cigarette pack as the specific consumable commodity.

### BEST MODE FOR CARRYING OUT THE INVENTION

One embodiment of the present invention will be explained referring to the attached drawings. A data processing system 100 of this embodiment is used for collecting data regarding consumption behaviors, represented by smoking behaviors, of a specific consumable commodity represented by a paper-rolled cigarette PT, at a specific space represented by a smoking space SS.

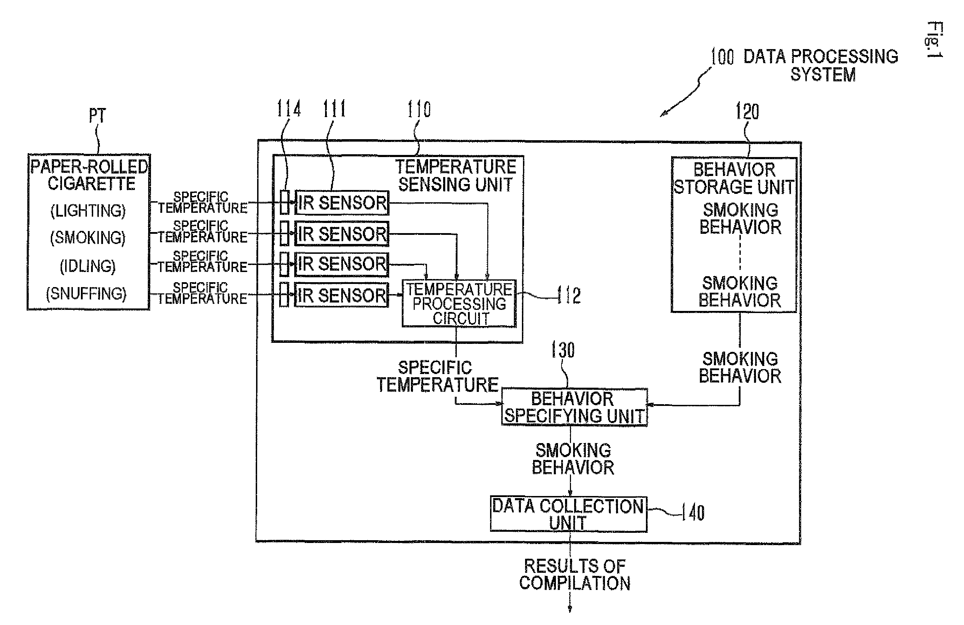

For this purpose, as illustrated in FIG. 1, the data processing system 100 has a temperature sensing unit 110 which senses a plurality of specific temperatures caused by the paper-rolled cigarettes PT when consumed at the smoking space SS; a behavior storage unit 120 which stores q plurality of combinations of the plurality of specific temperatures as a plurality of consumption behaviors of the paper-rolled cigarette PT by ordinary consumers; a behavior specifying unit 130 which specifies at least one smoking behavior which matches a combination of the plurality of specific temperatures sensed for each piece of the paper-rolled cigarette PT; and a data collection unit 140 which compiles the specified smoking behavior(s).

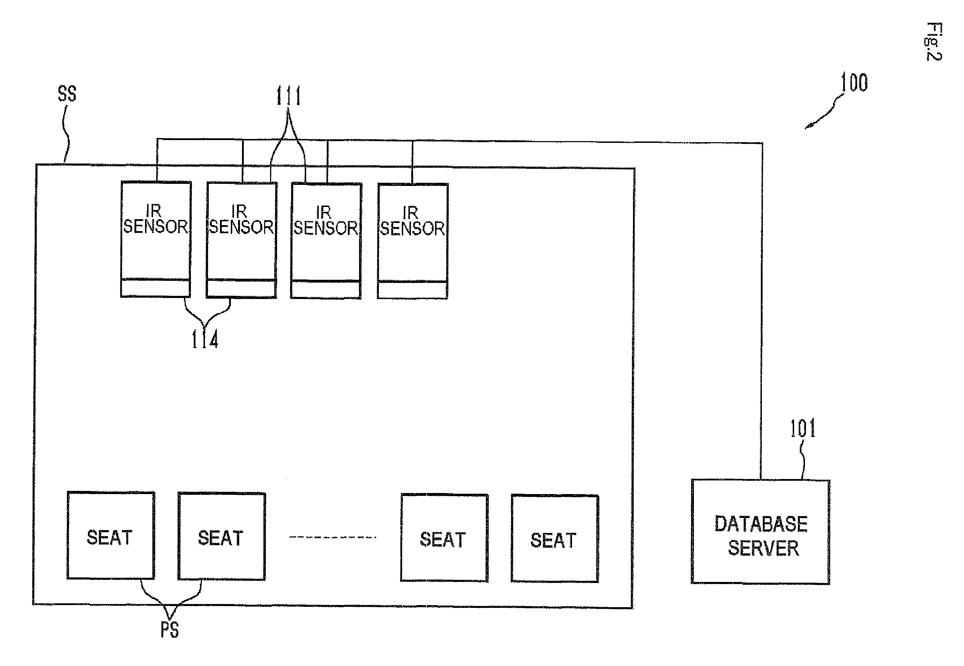

More specifically, the smoking space SS, to which the data processing system 100 of this embodiment is adopted, may be a room available in a building. As illustrated in FIG. 2, there are a plurality of seats PS provided to the smoking space SS.

IR sensors 111 are installed typically at the ceiling of the smoking space SS so as to capture images of all seats PS. The paper-rolled cigarette PT is, of course, consumed by burning. The temperature sensing unit 110 therefore has the IR sensors 111, a temperature processing circuit 112, optical filters 114 and so forth.

Each IR sensor 111 is typically configured by a PtSi-type or InSb-type sensor having a detection sensitivity for short-wavelength region from 2 to 5 µm, InGaAs-type sensor having a detection sensitivity for near-infrared region from 0.9 to 1.7 µm , MCT-type sensor having a detection sensitivity for long-wavelength region from 8 to 14 µm, QWIP-type sensor having a detection sensitivity for long-wavelength region from 8 to 9.2 µm, micro-bolometer-type sensor or ferroelectric-type sensor having a detection sensitivity for long-wavelength from 8 to 14 µm, and the like, for example.

Note that, in the data processing system 100 of this embodiment, as illustrated in FIG. 1 and FIG. 2, the plurality of optical filters 114 having different optical characteristics are respectively attached to the plurality of IR sensors 111, so as to be corresponded to the plurality of specific temperatures of the paper-rolled cigarette PT.

The temperature processing circuit 112 respectively detects the plurality of specific temperatures of the paper-rolled cigarette PT, based on signals respectively output from the plurality of IR sensors 111. The temperature sensing unit 110 therefore detects the specific temperatures at the time of lighting, idling, smoking and snuffing (putting out) of the paper-rolled cigarette PT.

The behavior storage unit 120 preliminarily stores occurrence patterns of the plurality of the specific temperatures as the plurality of types of smoking behaviors, and the behavior specifying unit 130 specifies at least one smoking behavior, by matching a detected pattern of the plurality of specific temperatures for each piece of the paper-rolled cigarette PT, with the occurrence patterns.

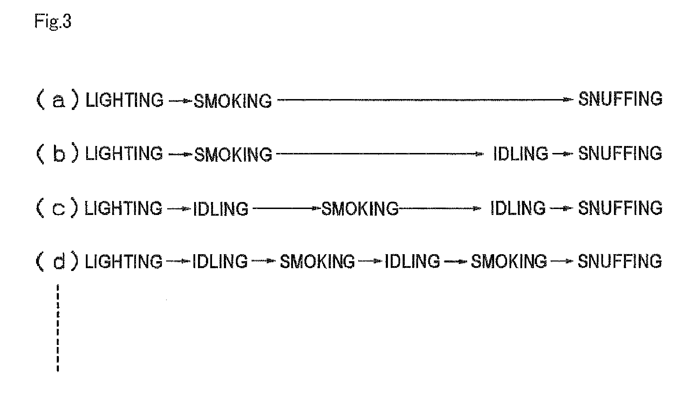

The paper-rolled cigarette PT causes different specific temperatures at the time of lighting, idling, smoking and snuffing. Accordingly, as illustrated in FIG. 3, the plurality of types of smoking behaviors, involving arbitrary number of times of idling and smoking over a period from lighting to snuffing, are preliminarily entered as the occurrence patterns of the specific temperatures into the data processing system 100.

As illustrated in FIG. 2, a database server 101 is installed in the back yard of the smoking space SS, and the above-described plurality of IR sensors 111 are connected to the database server 101.

The database server 101 has an appropriate computer program installed thereon. The above-described individual components 110 to 140 are logically embodied, by the database server 101 which executes various process operations corresponding to the computer program.

The temperature sensing unit 110 typically corresponds to a function which recognizes the specific temperatures respectively detected by the plurality of IR sensors 111 and converted into digital data outputs by the temperature processing circuit 112 as data in the database server 101 corresponding to the computer program.

The behavior storage unit 120 typically corresponds to a storage area recognized by the database server 101 corresponding to the computer program. The behavior specifying unit 130 typically corresponds to a function which executes a predetermined data processing in the database server 101 corresponding to the computer program. The data collection unit 140 typically corresponds to a function which accumulates and outputs predetermined data in the database server 101 corresponding to the computer program.

The above-described computer program for the data processing system 100 is typically described to allow the data processing system 100 to execute temperature sensing process which senses a plurality of specific temperatures caused by the paper-rolled cigarette PT when consumed at the smoking space SS; a behavior storage process which stores q plurality of combinations of the plurality of specific temperatures as a plurality of types of smoking behaviors of the paper-rolled cigarette PT by ordinary consumers; a behavior specifying process which specifies at least one smoking behavior which matches a combination of the plurality of specific temperatures sensed for each piece of the paper-rolled cigarette PT; and a data collection process which compiles the specified smoking behaviors.

In the above-descried configuration, the data processing system 100 of this embodiment collects data regarding the smoking behavior, typically by providing the smoking space SS to the ordinary consumers who smoke the paper-rolled cigarettes PT.

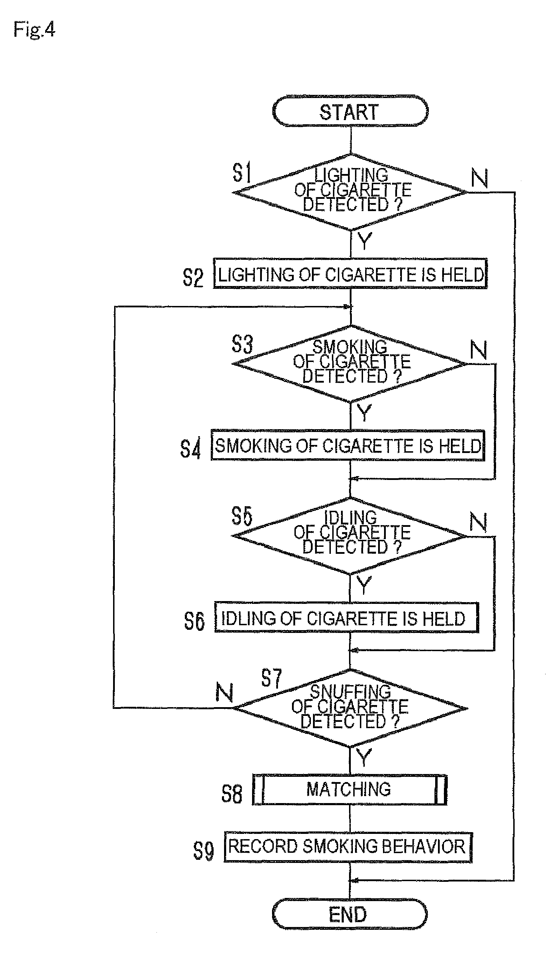

For more details, when an ordinary consumer takes the seat PS at the smoking space SS and lights a paper-rolled cigarette PT, as illustrated in FIG. 4, the data processing system 100 of this embodiment senses a specific temperature caused by the lighting using one of the plurality of IR sensors 111 (step S1).

The data processing system 100 herein specifies the burning paper-rolled cigarette PT until being snuffed out, typically by image recognition corresponded to the position of seat PS. The lighting of paper-rolled cigarette PT detected as described in the above is held in a data form (step S2).

The paper-rolled cigarette PT lit as described in the above will be snuffed out by the ordinary consumer, after being smoked or idled up to an arbitrary number of times. Accordingly, after the lighting is detected and held in a data form as described in the above (steps S1, S2), the data processing system 100 detects each of the smoking, idling and snuffing based on the correspondent specific temperatures, and holds the results in a data form (steps S3 to S7).

When the snuffing of the paper-rolled cigarette PT is finally detected (step S7), a detected pattern of smoking and idling, over the period from lighting to snuffing, held in a data form is then matched with the occurrence patterns of smoking and idling from lighting to snuffing, preliminarily stored as the smoking behaviors in a data form (step S8).

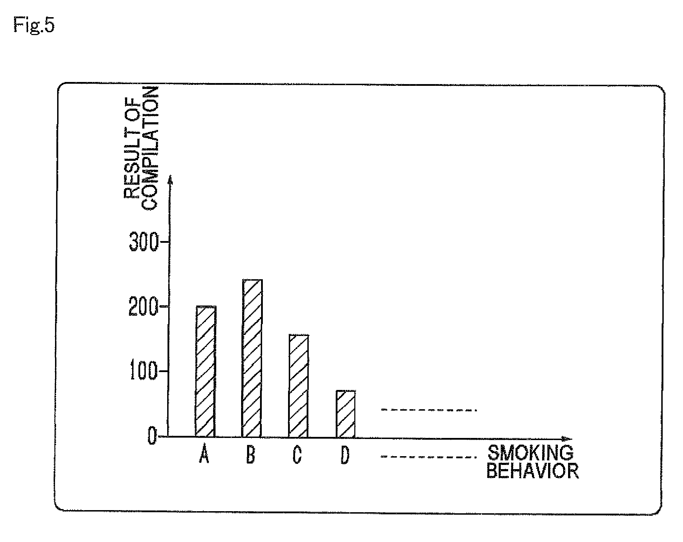

When the smoking behavior is specified in this way, the smoking behavior is counted (step S9). Since the plurality of smoking behaviors are specified and compiled as described in the above, for example as illustrated in FIG. 5, the data processing system 100 of this embodiment is now able to output the results of compilation on a display in a form of bar graph.

The data processing system 100 of this embodiment senses, using the temperature sensing unit 110, the plurality of specific temperatures caused by the paper-rolled cigarette PT consumed by the ordinary consumer at the smoking space SS, while storing a plurality of combinations of the plurality of specific temperatures as the plurality of smoking behaviors of the paper-rolled cigarette PT by ordinary consumers.

At least one smoking behavior which matches a combination of the plurality of specific temperatures sensed for each piece of the paper-rolled cigarette PT is specified, and the thus-specified consumption behavior is compiled by the data collection unit 140. Accordingly, data regarding smoking behaviors of the ordinary consumers, which are uncollectible at the points of time of order intake, production, shipping and selling and so forth of the paper-rolled cigarettes PT, can be collected.

In particular, the data processing system 100 of this embodiment preliminarily stores occurrence patterns of the plurality of specific temperatures as the plurality of types of smoking behaviors, and the smoking behavior is specified by matching a detected pattern of the plurality of specific temperatures for each piece of the paper-rolled cigarette PT with the occurrence patterns. Accordingly, various smoking patterns of smoking and idling of the paper-rolled cigarette PT, over a period from lighting to snuffing, may successfully be specified and collected in a data form.

In addition, in the data processing system 100 of this embodiment, the temperature sensing unit 110 respectively senses the specific temperatures of lighting, smoking, idling, and snuffing of the paper-rolled cigarette PT using the plurality of IR sensors 111. Accordingly, the smoking behaviors of the ordinary consumer may appropriately be detected, without erroneously detecting background radiation or the like.

Moreover, the temperature sensing unit 110 has the plurality of optical filters 114 having optical characteristics respectively corresponded to the plurality of specific temperatures, and the plurality of IR sensors 111 which respectively detect the plurality of specific temperatures through the plurality of optical filters. Accordingly, various types of device described in the above may be adoptable to the IR sensors 111 having such detection sensitivity, without limiting the systems thereof.

The present invention is not limited to this embodiment, instead allowing various modifications to be adopted without departing from the spirit of the invention. For example, the above-described embodiment exemplified a case where the specific consumable commodity which produce the specific temperatures as they are consumed, were composed of the paper-rolled cigarettes PT. However, the specific consumable commodity may alternatively be canned beverages sold under heating or cooling (not illustrated).

In the above-described embodiment, the cigarette actually smoked was denoted as paper-rolled cigarette PT, for clear discrimination from the cigarette packs TP. However, the specific consumable commodity actually smoked may alternatively be so-called cigars (not illustrated).

The above-described embodiment assumed the case where the plurality of uniform IR sensors 111 were combined with the plurality of optical filters 114 having different optical characteristics, and disposed in parallel with each other, in order to respectively detect the plurality of temperatures.

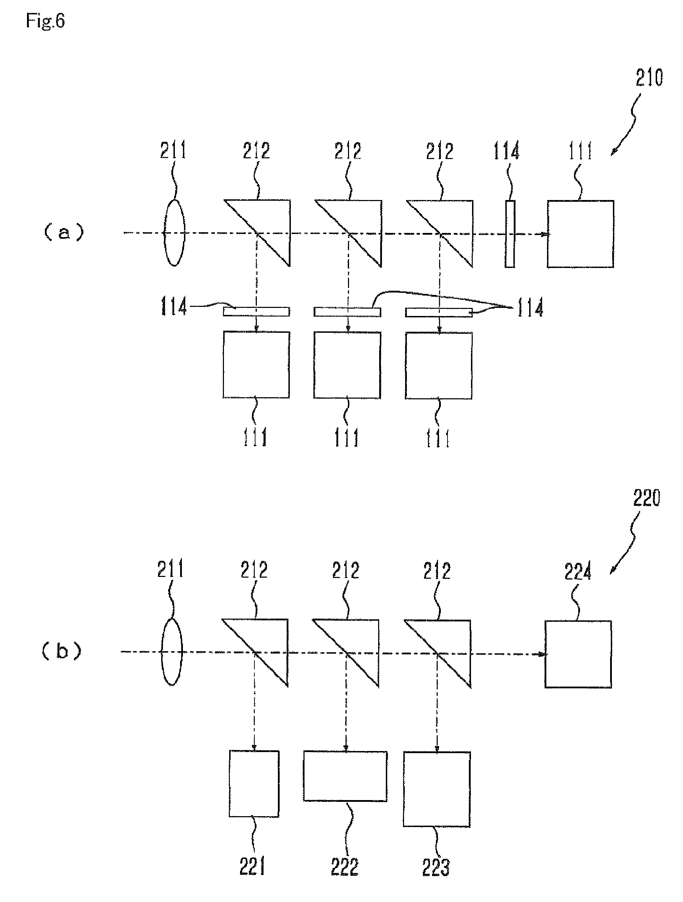

However, as illustrated in FIG. 6A, the above-described plurality of optical filters 114 and the plurality of IR sensors 111 may be formed to give a single optical unit 210. The optical unit 210 has an imaging optical system 211 and a plurality of beam splitters 212 aligned on the optical axis of imaging.

On the optical axis of each beam splitter 212, each IR sensor 111 is disposed while placing each optical filter 114 in between. Accordingly, the optical unit 210 may respectively sense the plurality of specific temperatures from a single captured image.

Alternatively, as an optical unit 220 as illustrated in FIG. 6B, a plurality of types of IR sensors 221 to 224, respectively configured to sense the plurality of specific temperatures, may be disposed on the optical axis of each beam splitter 212, without the optical filters.

The above-described embodiment exemplified the case where the data processing system 100 specifies the smoking behavior and collects the data. Alternatively, the data processing system 100 may further have a contents storage unit which stores digital contents; a contents output unit which outputs the digital contents to the smoking space SS, and an output control unit which outputs the digital contents corresponding to the specified smoking behavior (not illustrated).

In this case, the data processing system 100 may provide the digital contents to the ordinary consumers who smoke the paper-rolled cigarettes PT in the smoking space SS, in a good appealing manner corresponding to the smoking behaviors.

The above-described embodiment exemplified the case where the data processing system 100 simply counts the smoking, behaviors. Alternatively, the data processing system 100 may compile the specific temperatures together with date and time of detection, and may extract a correlation between the smoking behaviors and the date and time of detection (not illustrated).

Similarly, the data processing system 100 may further have a space storage unit which stores space attribute data for each of the plurality of smoking spaces SS, wherein the data collection unit may compile the specific temperatures together with the space attribute data, and may extract a correlation between the smoking behaviors and the space attribute data (not illustrated). In these cases, also data of trends in the smoking behaviors which may vary depending on date, time, place and so forth, may be collected.

Still alternatively, the data processing system 100 may further have a commodity reader unit which acquires commodity ID (Identity) data from the paper-rolled cigarettes PT consumed at the smoking space SS, wherein the data collection unit 140 may compile the specified smoking behaviors in correlation with the commodity ID data (not illustrated).

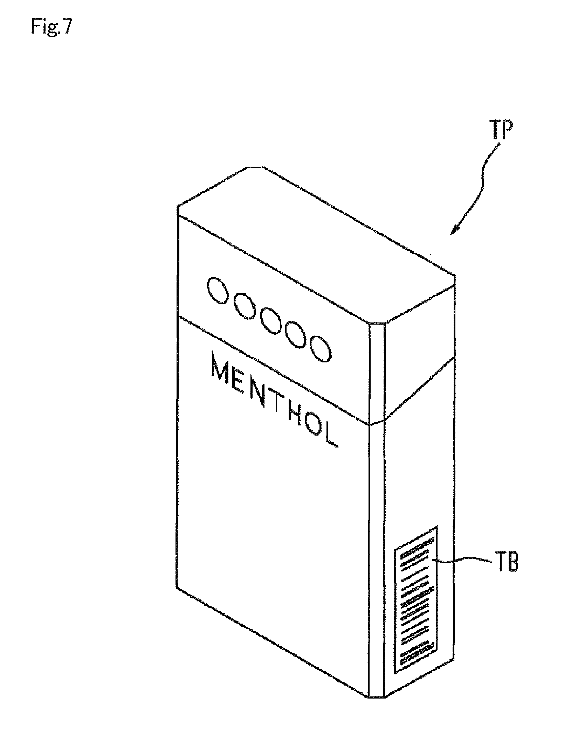

In this case, also the data of trends in the smoking behaviors, which may vary depending on cigarette brands, may be collected. As illustrated in FIG. 7, each of currently available cigarette packs TP of the paper-rolled cigarettes PT has commodity ID data, such as JAN (Japanese Article Number) code, expressed in a form of commodity bar code TB. Accordingly, the commodity ID data may optically be read by the commodity reader unit from the cigarette pack TP.

The above-described embodiment exemplified the case where the IR sensors 111 were installed at the smoking space SS in order to detect the smoking behaviors of the ordinary consumers. Alternatively, the data processing system 100 may judge occurrence of fire accident at the smoking space SS, based on the specific temperature sensed by the IR sensors 111 (not illustrated).

Of course, a fire alarm system is necessary for the smoking space SS. More specifically, it may now be understood that the above-described data processing system 100 may appropriately detect the smoking behaviors of the ordinary consumers, making use of the IR sensors 111 of the fire alarm system.

The above-described embodiment exemplified the case where the smoking space SS allowed free admittance for the ordinary consumers. The admittance into the smoking space SS may, alternatively, be limited by inspecting the cigarette packs TP illustrated in the above.

In this case, for example, the smoking space SS may have an electromotive gate and a bar code reader installed at the entrance thereof (not illustrated), so as to grant admittance to the smoking space SS only when the commodity bar code TB on the cigarette packs TP is confirmed (not illustrated).

Of course, the ordinary consumers in the smoking space SS have the cigarette packs TP, whereas the ordinary consumers having no cigarette pack TP cannot enter the smoking space SS. Accordingly, the approved ordinary consumers may enter the smoking space SS without problems.

The above-described embodiment exemplified the case where the smoking space SS was composed of one room available in a building. The smoking space SS may alternatively be smokers' seats provided to restaurants, an open space available outdoors, or the like (not illustrated).

Of course, the above-described embodiment and a plurality of modified examples may be combined insofar as the bodies of which do not conflict with each other. The structures of the individual components, specifically described in the aforementioned embodiment and modified examples, may be modified in various ways insofar as the present invention may be satisfied.

## Claims

1. A data processing system which collects data regarding a consumption behavior of a specific consumable commodity by an ordinary consumer at a specific space, comprising:
a temperature sensing unit which senses a plurality of specific temperatures caused by said specific consumable commodity when consumed at said specific space;
a behavior storage unit which stores a plurality of combinations of said plurality of specific temperatures as a plurality of consumption behaviors of said specific consumable commodity by ordinary consumers;
a behavior specifying unit which specifies at least one consumption behavior which matches a combination of said plurality of specific temperatures sensed for a piece of said specific consumable commodity; and
a data collection unit which compiles said specified consumption behavior.

2. The data processing system as claimed in Claim 1,
wherein said behavior storage unit preliminarily stores occurrence patterns of said plurality of specific temperatures as said plurality of consumption behaviors, and
said behavior specifying unit specifies at least one consumption behavior, by matching a detected pattern of said plurality of specific temperatures for said piece of said specific consumable commodity, with said occurrence patterns.

3. The data processing system as claimed in Claim 1 or 2,
wherein said temperature sensing unit has a plurality of IR sensors having detection sensitivity respectively corresponded to said plurality of specific temperatures.

4. The data processing system as claimed in Claim 1 or 2,
wherein said temperature sensing unit has a plurality of optical filters having optical characteristics respectively corresponded to said plurality of specific temperatures, and a plurality of IR sensors which respectively detect said plurality of specific temperatures through said plurality of optical filters.

5. The data processing system as claimed in any one of Claims 1 to 4,
wherein said specific consumable commodity is composed of a cigarette,
said specific space is composed of a smoking space, and said temperature sensing unit senses said specific temperatures at least at the times of lighting and snuffing of said cigarette.

6. The data processing system as claimed in any one of Claims 1 to 5,
wherein said specific consumable commodity is composed of a cigarette,
said specific space is composed of a smoking space, and said temperature sensing unit senses said specific temperatures at least at the times of idling and smoking of a burning cigarette.

7. The data processing system as claimed in any one of Claims 1 to 6, further comprising:
a contents storage unit which stores digital contents;
a contents output unit which outputs said digital contents to said specific space; and
an output control unit which outputs said digital contents corresponding to said specified consumption behaviors.

8. The data processing system as claimed in any one of Claims 1 to 7,
wherein said data collection unit compiles said specific temperatures together with date and time of detection, and extracts a correlation between said consumption behavior and said date and time of detection.

9. The data processing system as claimed in any one of Claims 1 to 8, further comprising:
a space storage unit which stores space attribute data for each of said plurality of specific spaces,
wherein said data collection unit compiles said specific temperatures together with said space attribute data, and extracts a correlation between said consumption behavior and said space attribute data.

10. The data processing system as claimed in any one of Claims 1 to 9, further comprising:
a commodity reader unit which acquires commodity ID data from said specific consumable commodity consumed at said specific space,
wherein said data collection unit compiles said specified consumption behavior in correlation with said commodity ID data.

11. The data processing system as claimed any one of Claims 1 to 10, further comprising:
a fire judgment unit which judges occurrence of fire accident at said specific space based on said specific temperature sensed by said temperature sensing unit.

12. A computer program of a data processing system which collects data regarding a consumption behavior of a specific consumable commodity by an ordinary consumer at a specific space, said computer program being configured to allow said data processing system to execute:
a temperature sensing process which senses a plurality of specific temperatures caused by said specific consumable commodity when consumed at said specific space;
a behavior storage process which stores a plurality of combinations of said plurality of specific temperatures as a plurality of consumption behaviors of said specific consumable commodity by ordinary consumers;
a behavior specifying process which specifies at least one consumption behavior which matches a combination of said plurality of specific temperatures sensed for each piece of said specific consumable commodity; and
a data collection process which compiles said specified consumption behavior.

13. A data processing method of a data processing system which collects data regarding a consumption behavior of a specific consumable commodity by an ordinary consumer at a specific space, said method comprising:
a temperature sensing step which senses a plurality of specific temperatures caused by said specific consumable commodity when consumed at said specific space;
a behavior storage step which stores a plurality of combinations of said plurality of specific temperatures as a plurality of consumption behaviors of said specific consumable commodity by ordinary consumers;
a behavior specifying step which specifies at least one consumption behavior which matches a combination of said plurality of specific temperatures sensed for each piece of said specific consumable commodity; and
a data collection step which compiles said specified consumption behavior.
